# EUROPEAN PATENT APPLICATION

(11) **EP 1 788 030 A1**
(43) Date of publication of application: **23.05.2007**
(21) Application number: 06024124.7
(22) Date of filing: 21.11.2006
(51) Int. Cl.: C08L 83/00, C09D 5/00, C09D 183/00

(54) **Hydrophilic composition and hydrophilic member**

(30) Priority: 22.11.2005 JP 2005337182
(71) Applicant: Fujifilm Corporation, Minato-ku Tokyo (JP)
(72) Inventor: Tanaka, Satoshi Fujifilm Corporation, Ashigarakami-gun Kanagawa (JP); Hoshi, Satoshi Fujifilm Corporation, Ashigarakami-gun Kanagawa (JP); Shimada, Kazuto Fujifilm Corporation, Haibara-gun Shizuoka-ken (JP); Kunita, Kazuto Fujifilm Corporation, Haibara-gun Shizuoka-ken (JP)
(74) Representative: HOFFMANN EITLE

(57) **Abstract**

A hydrophilic composition containing (A) a hydrophilic polymer having a structural unit represented by the following formula (I-b) and having a functional group represented by the following formula (I-a) at a terminal end of the polymer chain, and (B) an alkoxide compound containing an element selected from Si, Ti, Zr and A1, and a hydrophilic member having a hydrophilic film formed, on a substrate, by forming a film of the hydrophilic composition and heating and drying the same.
Formula (I-a) Formula (I-b)
In the formulae, R¹ to R⁴ each represent a hydrogen atom or a hydrocarbon group having 8 or less carbon atoms; m represents 0, 1, or 2; Y represents a bivalent connection group having, for example, -CO₂ or -NHCO-; L represents a single bong 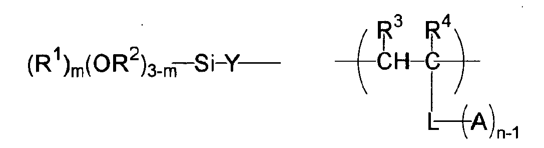 or an n-valent organic connection group; n represents an integer of 1 to 4; and A represents a hydrophilic group.

## Description

### BACKGROUND OF THE INVENTION

### Field of the Invention

The present invention relates to a hydrophilic composition used for forming a hydrophilic film excellent in anti-staining property, anti-fogging property, and having more preferred friction resistance on the surfaces of various substrates, as well as a hydrophilic member having a hydrophilic film and having anti-staining property and anti-fogging property.

### Description of the Related Art

Various techniques for preventing deposition of oily contaminants to surface of materials have been proposed. Particularly, optical members such as anti-reflective film, optical filter, optical lens, spectacle lens and mirror are deposited with contaminations such as finger prints, sebums, sweat, cosmetics; etc. during use and their functions are deteriorated. Since removal of contaminations is troublesome, it is desired to apply effective anti-staining treatment. Further, along with popularized use of mobiles in recent years, displays have been used more and more in outdoors. When they are used under a circumstance where external light enters, the incident light is reflected regularly on the display surface and the reflected light is mixed with a display light to result in a problem of making the display image difficult to see. Accordingly, an anti-reflective optical member has often been disposed on the surface of the display.
Known anti-reflective optical members include, for example, those formed by laminating a high refractive index layer and a low refractive index layer, for example, of a metal oxide on the surface of a transparent substrate, those in which a low refractive index layer, for example, of an inorganic fluoro-compound or organic fluoro-compound is formed as a single layer on the surface of a transparent substrate, or those prepared by forming a coating layer containing fine transparent particles on the surface of a transparent plastic film substrate for diffuse reflection of external light by the uneven surface. Also the anti-reflective optical members are liable to suffer from deposition of contaminations such as finger prints or sebums during use like usual optical members as described above. Then, this results in a problem of increasing the reflection only for the contamination-deposited portions which show dirt conspicuously, as well as a problem that removal of contamination is difficult since fine unevenness is usually present on the anti-reflective film.

Various techniques of forming an anti-staining function having a performance of making the contamination less depositing on the surface of a solid member or facilitating removal of deposited contaminations to the surface have been proposed. Particularly, a combination of an anti-reflective member mainly comprising silicon dioxide and an anti-staining and friction resistant material formed by treating with an organic silicon substituent containing compounds (for example, refer to JP-A No 64-86101), or an anti-staining and friction resistant CRT filter formed by coating the surface of a substrate with an end silanol organic polysiloxane (for example, refer to JP-A No. 4-338901) has been proposed as a combination of an anti-reflection member and an anti-staining member. Further, combinations of an anti-reflective film containing a silane compound including a silane compound containing a polyfluoro alkyl group (for example, refer to JP-B No. 6-29332) and an optical thin film mainly comprising silicon dioxide, and a copolymer of perfluoroalkyl acrylate and a monomer having an alkoxy silane group (for example, refer to JP-A No. 7-16940) are proposed respectively.
However, the anti-staining layers formed by the existent methods are insufficient in the anti-staining property and, particularly, contaminations such as finger prints, sebums and cosmetics are difficult to be wiped off. Further, the surface treatment with a material of low surface energy such as fluorine or silicon may result in a worry of aging deterioration for the anti-staining performance. Accordingly, it has been desired for the development of an anti-staining member excellent in the anti-staining property and the durability.

Resin films or inorganic materials such as glass or metal used generally for the surface of optical members usually have a surface which is hydrophobic or exhibits weak hydrophilicity. When the surface of the substrate using a resin film or an inorganic material is rendered hydrophilic, deposited water droplets prevail uniformly on the surface of the substrate to form a uniform water membrane. As a result, this can effectively prevent fogging of glass, lens, or mirror, which is useful for preventing devitrification due to moisture and for ensuring sight in rainy weather. Further, since hydrophobic contamination substances such as combustion products of carbon black contained in city smoke dusts, exhaust gases of automobiles, etc. oils and fats and sealant leaching ingredients are less deposited and they can be simply cleaned off, if deposited, by rainfall or water washing, they are useful for various applications.

According to the surface treating method for rendering the surface hydrophilic proposed so far (for example, etching treatment, plasma treatment, etc.), while the surface can be rendered highly hydrophilic, the effect is only temporary and the hydrophilic state can not be kept for long time. Further, a surface hydrophilic coating film using a hydrophilic graft polymer as one of hydrophilic resins has also been proposed (for example, refer to the article in newspaper, "The Chemical Daily" January 30, 1995). However, while the coating film has a hydrophilicity to some extent, affinity with a substrate can not be said sufficient and higher durability is desired.

Further, as a film excellent in the surface hydrophilicity, films using titanium oxide have been known so far. For example, there has been disclosed a technique of forming a photocatalyst containing layer on a substrate surface, and rendering the surface highly hydrophilic in accordance with the photo-excitation of the photocatalyst. It is reported that in a case of applying the technique to various composite materials such as glass, lens, mirror, exterior material, or member for water supply system, excellent anti-staining property can be provided to the composite materials (for example, refer to the pamphlet of WO/1996/029375). However, a hydrophilic film using titanium oxide involves a problem that it has no sufficient film strength and that the applicable portion for use is restricted since the hydrophilic effect is not developed unless it is photo-excited. Accordingly, it has been demanded for an anti-staining member having long lasting property and satisfactory friction resistant property.

### SUMMARY OF THE INVENTION

In view of the foregoing problems, the present invention intends to provide a hydrophilic composition used for forming a hydrophilic film excellent in anti-staining property and anti-fogging property and having more preferred friction resistance on various substrate surfaces. Further, it also intends to provide a hydrophilic member having a hydrophilic film and having anti-staining property and anti-fogging property.

For attaining the subject described above, the present inventors have made a study taking notice on the characteristic of a hydrophilic graft polymer. As a result, the present inventors have found that the foregoing object can be attained in accordance with a surface layer having a crosslinked structure formed by hydrolyzing and polycondensating a hydrophilic polymer and an alkoxide. Further, it has been found that a surface layer having the crosslinked structure as described above can be obtained easily by the combination of a specified hydrophilic polymer having reactive groups on the terminal end and a crosslinker, to accomplish the present invention.
That is, the hydrophilic composition of the invention comprises (A) a hydrophilic polymer having a structural unit represented by the following formula (I-b) and having a functional group represented by the following formula (I-a) at a terminal end of a polymer chain [hereinafter sometimes referred to as a specified hydrophilic polymer (A) or an ingredient(A)], and (B) an alkoxide compound of an element selected from Si, Ti, Zr, and Al [hereinafter sometimes referred to as a specified alkoxide (B) or ingredient (B)].

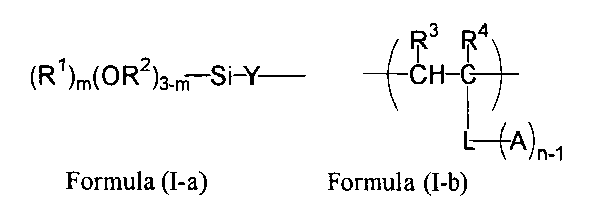

In the formula (I-a) and (I-b), R¹, R², R³, and R⁴ each independently represent a hydrogen atom or a hydrocarbon group having 8 or less carbon atoms. m represents 0, 1 or 2, Y represents a bivalent connection group having one or more of structures selected from the group consisting of -CO₂-, -NHCO-, -NHCONH-, -NHCO₂-, -O- and -NH-. L represents a single bond or an n-valent organic connection group, and n represents an integer of from 1 to 4.
A is a hydrophilic group and represents -OR⁵, -COR⁵, -CO₂R⁹, -CON(R⁵)(R⁶), -N(R⁵)(R⁶), -NHCOR⁸, -NHCO₂R⁵, -OCON(R⁵)(R⁶), -NHCON(R⁵)(R⁶), -SO₃R⁹, -OSO₃R⁹, -SO₂R⁸, -NHSO₂R⁸, -SO₂N(R⁵)(R⁶), -PO₃(R⁹)(R¹⁰), -OPO₃(R⁹)(R¹⁰), -PO₂(R⁸)(R⁹), -N(R⁵)(R⁶)(R⁷) or -N(R⁵)(R⁶)(R⁷)(R¹¹) in which R⁵, R⁶, R⁷ each independently represent a hydrogen atom or a linear, branched, or cyclic alkyl group having 1 to 8 carbon atoms, R⁸ represents a linear, branched, or cyclic alkyl group having 1 to 8 carbon atoms, R⁹, R¹⁰ each independently represent a hydrogen atom or a linear, branched or, cyclic alkyl group having 1 to 8 carbon atoms, an alkali metal, an alkaline earth metal or an onium, R¹¹ represents a linear, branched, or cyclic an alkyl group having 1 to 8 carbon atoms, a halogen atom, inorganic anion, or an organic anion.

Further, the hydrophilic member of the invention has a hydrophilic film formed by forming, on a support, a film of a hydrophilic composition comprising (A) a hydrophilic polymer having a structural unit represented by the formula (I-b) and having a functional group represented by the formula (I-a) to the terminal end of a polymer chain, and (B) an alkoxide compound of an element selected from Si, Ti, Zr, and Al, and heating and drying the film. The hydrophilic film has a crosslinked structure formed by preparing the hydrophilic composition and coating the same.

The hydrophilic composition, or a hydrophilic composition used for forming the hydrophilic member of the invention further contains preferably (C) a catalyst, and the catalyst (C) includes a compound for promoting the reaction between the specified alkoxide (B) and the hydrophilic polymer (A).

While the operation of the invention is not clear, in the hydrophilic layer having the hydrophilic graft chain and having the crosslinked structure formed by hydrolysis and polycondensation of the alkoxide of a metal selected from Si, Ti, Zr, and Al, since the hydrophilic functional groups introduced in the state of the graft chain are localized at the surface in a free state, and an organic-inorganic composite film having a high-density crosslinked structure is formed by hydrolysis and polycondensation of the metal alkoxide, a film of high strength having high hydrophilicity is obtained.

Specifically, it is considered that by dissolving and stirring the specified hydrophilic polymer (A) into an appropriate solvent, hydrolysis and polycondensation proceed in the system to obtain a sol-like hydrophilic composition (hydrophilic solution). This is coated on a substrate and dried to form an organic-inorganic composite film in which hydrophilic functional groups are localized in a free state on a substrate and which has a crosslinked structure formed by reaction of silane coupling groups with each other. Further, by adding the specified alkoxide (B) into the hydrophilic solution, reaction sites for forming crosslinking increase in the hydrolysis and polycondensation in the system due to the silane coupling groups and the polymerizable functional groups in the hydrolyzable compound. As a result, since the organic-inorganic composite film having a crosslinked structure of higher density and strength is formed, the film (hydrophilic film) formed on the surface of the member has higher strength, exhibits excellent abrasion resistance, and can maintain high surface hydrophilicity for a long time.

### DESCRIPTION OF THE PREFERRED EMBODIMENTS

The present invention is to be described specifically.
The hydrophilic composition of the invention comprises (A) a hydrophilic polymer represented by the following formulae (I-a) and (I-b), and (B) an alkoxide compound of an element selected from Si, Ti, Zr. and Al.

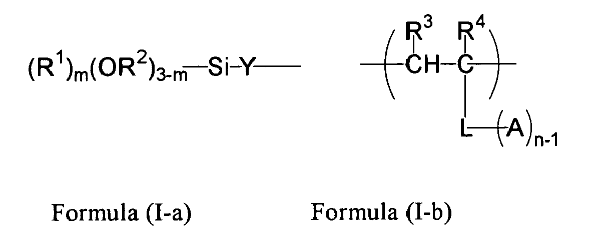

In the formulae (I-a) and (I-b), R¹, R², R³, and R⁴ each independently represent a hydrogen atom or a hydrocarbon group having 8 or less carbon atoms. m represents 0, 1, or 2, Y represents a bivalent connection group having one or more of structures selected from the group consisting of -CO₂-, -NHCO-, -NHCONH-, -NHCO₂-, -O- and -NH-. L represents a single bond or an n-valent organic connection group, and n represents an integer of from 1 to 4.
A represents -OR⁵, -COR⁵, -CO₂R⁹, -CON(R⁵)(R⁶), -N(R⁵)(R⁶), -NHCOR⁸, -NHCO₂R⁵, -OCON(R⁵)(R⁶), -NHCON(R⁵)(R⁶), -SO₃R⁹, -OSO₃R⁹, -SO₂R⁸, -NHSO₂R⁸, -SO₂N(R⁵)(R⁶), -PO₃(R⁹)(R¹⁰), -OPO₃(R⁹)(R¹⁰), -PO₂(R⁸)(R⁹), -N(R⁵)(R⁶)(R⁷) or -N(R⁵)(R⁶)(R⁷)(R¹¹) in which R⁵, R⁶, R⁷ each independently represent a hydrogen atom or a linear, branched, or cyclic alkyl group having 1 to 8 carbon atoms, R⁸ represents a linear, branched, or cyclic alkyl group having 1 to 8 carbon atoms, R⁹, R¹⁰ each independently represent a hydrogen atom or a linear, branched, or cyclic alkyl group having 1 to 8 carbon atom, an alkali metal, an alkaline earth metal, or an onium, R¹¹ represents a linear, branched, or cyclic alkyl group having 1 to 8 carbon atoms, a halogen atom, an inorganic anion, or an organic anion.

By forming a film on an appropriate substrate with such a hydrophilic composition and drying the same, a hydrophilic film having a crosslinked structure having a hydrophilic graft chain and formed by hydrolysis and polycondensation of an alkoxide of an element selected from Si, Ti, Zr, A1 can be formed. The hydrophilic film having such a crosslinked structure is formed by the alkoxide structure exemplified above and a compound having a hydrophilic functional group capable of forming the hydrophilic graft chain.
(B) Among the specified alkoxides, Si alkoxide is preferred in view of reactivity and easy availability. Specifically, compounds used for silane coupling agents can be used suitably.
The crosslinked structure formed by the hydrolysis and polycondensation of the alkoxide described above is hereinafter referred to optionally as a sol-gel crosslinked structure.
Each of the ingredients contained in the hydrophilic composition of the invention is to be described.

[(A) Hydrophilic polymer having the structural unit represented by formula (I-b), and having the functional group represented by the formula (I-a) at a terminal end of the polymer chain]
The specified hydrophilic polymer (A) that can be used in the invention has a structural unit represented by the following formula (I-b) and has a functional group represented by the following formula (I-a) at a terminal end of the polymer chain after polymerizing reaction.

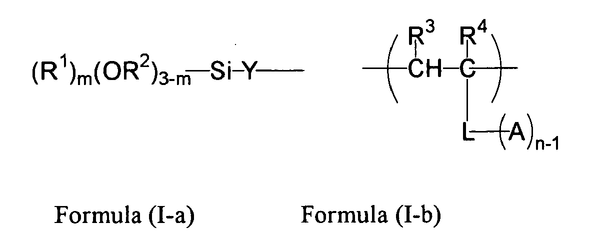

In the formulae (I-a) and (I-b), R¹, R², R³, and R⁴ each independently represent a hydrogen atom or a hydrocarbon group having 8 or less carbon atoms. m represents 0, 1, or 2. Y represents a bivalent connection group having one or more of structures selected from the group consisting of -CO₂-, -NHCO-, -NHCONH-, -NHCO₂-, -O-, and -NH-. L represents a single bond or n-valent organic connection group. Further, n represents an integer of from 1 to 4.
A is a hydrophilic group and represents -OR⁵, -COR⁵, -CO₂R⁹, -CON(R⁵)(R⁶), -N(R⁵)(R⁶), -NHCOR⁸, -NHCO₂R⁵, -OCON(R⁵)(R⁶), -NHCON(R⁵)(R⁶), -SO₃R⁹, -OSO₃R⁹, -SO₂R⁸, -NHSO₂R⁸, -SO₂N(R⁵)(R⁶), -PO₃(R⁹)(R¹⁰), -OPO₃(R⁹)(R¹⁰), -PO₂(R⁸)(R⁹), -N(R⁵)(R⁶)(R⁷), or -N(R⁵)(R⁶)(R⁷)(R¹¹) in which R⁵, R⁶, R⁷ each independently represent a hydrogen atom or a linear, branched, or cyclic alkyl group having 1 to 8 carbon atoms, R⁸ represents a linear, branched, or cyclic alkyl group having 1 to 8 carbon atoms, R⁹, R¹⁰ each independently represent a hydrogen atom or a linear, branched, or cyclic alkyl group having 1 to 8 carbon atom, an alkali metal, an alkaline earth metal or an onium, R¹¹ represents a linear, branched, or cyclic alkyl group having 1 to 8 carbon atoms, a halogen atom, an inorganic anion, or an organic anion.

The hydrocarbon group in a case where R¹ to R⁴ each represents a hydrocarbon group includes alkyl group or aryl group, a linear, branched or cyclic alkyl group having 1 to 8 carbon atoms is preferred. Specifically, it includes a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
R¹ to R⁴ is, preferably, a hydrogen atom, a methyl group, or an ethyl group with a view point of the effect and the easy availability.

The hydrocarbon groups may further have a substituent. In a case where the alkyl group has a substituent, the substituted alkyl group is constituted by bonding of the substituent and an alkylene group. As the substituent, a monovalent non-metal atom group excluding hydrogen is used. Preferred examples include a halogen atom (-F, -Br, -Cl, -I), a hydroxyl group, an alkoxy group, an aryloxy group, a mercapto group, an alkylthio group, an atylthio group, an alkyldithio group, an aryldithio group, an amino group, an N-alkylamino group, an N,N-diarylamino group, an N-alkyl-N-arylamino group, an acyloxy group,a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, an ureido group, an N'-alkylureido group, an N',N'-dialkyl ureido group, an N'-aryl an ureido group, an N',N'-diaryl ureido group, an N'-alkyl-N'-aryl ureido group, an N-alkyl ureido group, an N-aryl ureido group, an N'-alkyl-N-alkyl an ureido group, an N'-alkyl-N-aryl ureido group, an N',N'-dialkyl-N-alkyl ureido group, an N',N'-dialkyl-N-aryl ureido group, an N'-aryl-N-alkyl ureido group, an N'-aryl-N-aryl ureido group, an N',N'-diaryl-N-alkyl ureido group, an N',N'-diaryl-N-aryl ureido group, an N'-alkyl-N'-aryl-N-alkyl ureido group, an N'-alkyl-N'-aryl-N-aryl ureido group, an alkoxy carbonyl amino group, an aryloxy carbonyl amino group, an N-alkyl-N-alkoxy a carbonyl amino group, an N-alkyl-N-aryloxy carbonyl amino group, an N-aryl-N-alkoxy carbonyl amino group, an N-aryl-N-aryloxy carbonyl amino group, a hormyl group, an acyl group, an carboxyl group, an akoxycarbonyl group,

an aryloxy carbonyl group, an carbamoyl group, an N-alkyl carbamoyl group, an N,N-dialkyl carbamoyl group, an N-aryl carbamoyl group, an N,N-diaryl carbamoyl group, an N-alkyl-N-aryl carbamoyl group, an alkyl sulfinyl group, an aryl sulfinyl group, an alkyl sulfonyl group, an aryl sulfonyl group, a sulfo group (-SO₃H) and conjugated base salts thereof (hereinafter referred to as sulfonate group), an alkoxy sulfonyl group, an aryloxy sulfonyl group, an sulfinamoyl group, an N-alkyl sulfinamoyl group, an N,N-dialkyl sulfinamoyl group, an N-aryl sulfinamoyl group, an N,N-diaryl sulfinamoyl group, an N-alkyl-N-aryl sulfinamoyl group, a sulfamoyl group, an N-alkyl sulfamoyl group, an N,N-dialkyl sulfamoyl group, an N-aryl sulfamoyl group, an N,N-diaryl sulfamoyl group, an N-alkyl-N-aryl sulfamoyl group, a phosphono group (-PO₃H₂) and a conjugated base groups thereof (hereinafter referred to as phosphonate group), a dialkyl phosphono group (-PO₃(alkyl)₂), a diaryl phosphono group (-PO₃(aryl)₂), an alkylaryl phosphono group (-PO₃(alkyl)(aryl)), a monoalkyl phosphono group (-PO₃H(alkyl)) and a conjugated base group thereof (hereinafter referred to as an alkyl phosphonate group), a monoaryl phosphono group (-PO₃H(aryl)) and a conjugated base group thereof (hereinafter referred to as an aryl phosphonate group), a phosphonoxy group (-OPO₃H₂) and a conjugated base group thereof (hereinafter referred to as a phosphonate group), a dialkyl phosphonoxy group (-OPO₃(alkyl)₂), a diaryl phosphonoxy group (-OPO₃(aryl)₂), an alkylaryl phosphonoxy group (-OPO(alkyl)(aryl)), a monoalkyl phosphoxy group (-OPO₃H(alkyl)) and conjugated base group thereof (hereinafter referred to as an alkyl phosphonatoxy group), a monoaryl phosphonoxy group (-OPO₃H(aryl)) as well as a conjugated base group (hereinafter referred to as an aryl phosphonatoxy group), a morpholino group, a cyano group, a nitro group, an aryl group, an alkenyl group, and an alkynyl group.

Specific examples of the alkyl group in the substituents described above include the same alkyl groups as mentioned for R¹ to R⁴ and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyl phenyl group, a methoxy phenyl group, an ethoxy phenyl group, a phenoxy phenyl group, an acetoxy phenyl group, a benzoyloxy phenyl group, a methylthio phenyl group, a phenylthio phenyl group, a methylamino phenyl group, a dimethylamiho phenyl group, an acetylamino phenyl group, a carboxy phenyl group, a methoxy carbonyl phenyl group, an ethoxy phenyl carbonyl group, a phenoxy carbonyl phenyl group, an N-phenyl carbamoyl phenyl group, a phenyl group, a cyano phenyl group, a sulfo phenyl group, a sulfonate phenyl group, a phosphono phenyl group, and a phosphonate phenyl group. Further examples of the alkenyl group include a vinyl group, a 1-propenyl group, a 1-butenyl group, a cynnamyl group, and a 2-chloro-1-ethenyl group, and examples of the alkynyl group include an ethynyl group, a 1-propinyl group, a 1-butynyl group, and a trimethyl silyl ethynyl group. G¹ in the acyl group (G¹CO-) includes hydrogen, and the alkyl group and the aryl group described above.

Among them, more preferred substituents include a halogen atom (-F, -Br, -Cl, -I), an alkoxy group, an aryloxy group, an alkylthio group, an arylthio group, an N-alkylamino group, an N,N-dialkylamino group, an acyloxy group, an N-alkyl carbamoyloxy group, an N-aryl carbamoyloxy group, an acylamino group, a formyl group, an acyl group, a carboxyl group, an alkoxy carbonyl group, an aryloxy carbonyl group, a carbamoyl group, an N-alkyl carbamoyl group, an N,N-dialkyl carbamoyl group, an N-aryl carbamoyl group, an N-alkyl-N-aryl carbamoyl group, sulfo group, a sulfonate group, a sulfamoyl group, an N-alkyl sulfamoyl group, an N,N-dialkyl sulfamoyl group, an N-aryl sulfamoyl group, an N-alkyl-N-aryl sulfamoyl group, a phosphono group, a phosphonate group, a dialkyl phosphono group, a diaryl phosphono group, a monoalkyl phosphono group, an alkyl phosphonate group, a monoaryl phosphono group, an aryl phosphonate group, a phosphonooxy group, a phosphonateoxy group, aryl group, and an alkenyl group.

On the other hand, the alkylene group in the substituted alkyl group includes those formed by removing one of hydrogen atoms on the alkyl group having 1 to 20 carbon atoms described above to form a bivalent organic residue, and include, preferably, linear an alkylene group having 1 to 12 carbon atoms, a branched alkylene group having 3 to 12 carbon atoms, and cyclic alkylene group having 5 to 10 carbon atoms. Preferred specific examples of the substituted alkyl group obtained by combination of the substituent and the alkylene group include a chloromethyl group, a bromomethyl group, a 2-chloroethyl group, a trifluoromethyl group, a methoxymethyl group, a methoxyethoxy ethyl group, an allyloxy methyl group, a phenoxy methyl group, a methyl thiomethyl group, a tolylthio methyl group, an ethylamino ethyl group, a diethylamino propyl group, a morpholino propyl group, an acetyloxy methyl group, a benzoyloxy methyl group, an N-cyclohexyl carbamoyloxy ethyl group, an N-phenyl carbamoyloxy ethyl group, an acetylamino ethyl group, an N-methyl benzoyl amino propyl group, a 2-oxyethyl group, a 2-oxypropyl group, a carboxy propyl group, a methoxy carbonyl ethyl group, an allyloxy carbonyl butyl group,

a chlorophenoxy carbonyl methyl group, a carbamoyl methyl group, an N-methyl carbamoyl ethyl group, an N,N-dipropyl carbamoyl methyl group, an N-(methoxyphenyl) carbamoyl ethyl group, an N-methyl-N-(sulfophenyl) carbamoyl methyl group, a sulfobutyl group, a sulfonate butyl group, a sulfamoyl butyl group, an N-ethyl sulfamoyl methyl group, an N,N-dipropyl sulfamoyl propyl group, an N-tolylsulfamoyl propyl group, an N-methyl-N-(phosphonophenyl) sulfamoyl octyl group, a phosphono butyl group, a phosphonate hexyl group, a diethyl phosphono butyl group, a diphenyl phosphono propyl group, a methyl phosphono butyl group, a methyl phosphonate butyl group, a tolyl phosphono hexyl group, a tolyl phosphonate hexyl group, a phosphoxy propyl group, a phosphonateoxy butyl group, a benzyl group, a phenethyl group, an α-methyl benzyl group, a 1-methyl-1-phenyl ethyl group, a p-methyl benzyl group, a cynnamyl group, an allyl group, a 1-propenyl methyl group, a 2-butenyl group, a 2-methyl allyl group, a 2-methyl propenyl methyl group, a 2-propenyl group, a 2-butynyl group, and an 3-butynyl group, etc.
m represents 0, 1, or 2, and, 0 is preferred among them.

Y represents a bivalent connection group having one or more of structures selected from the group consisting of -CO₂-, -NHCO-, -NHCONH-, -NHCO₂-, -O-, and -NH-. The structure may be present by two or more in Y in which they may also be different from each other.

L represents a single bond or an n-valent organic connection group. n represents an integer of from 1 to 4. The organic connection group shows herein a connection group comprising a non-metal atom. Specifically, it comprises from 1 to 60 carbon atoms, from 0 to 10 nitrogen atom, from 0 to 50 oxygen atoms, from 1 to 100 hydrogen atom, and from 0 to 20 sulfur atom. More specific connection groups include those constituted by the following structural units or combination thereof.

-CH₂- -O- 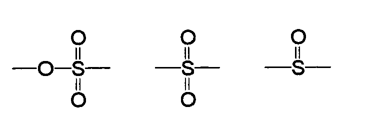 -S-

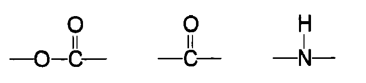

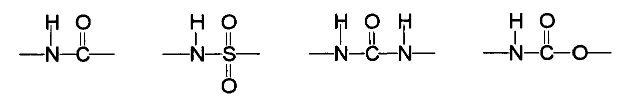

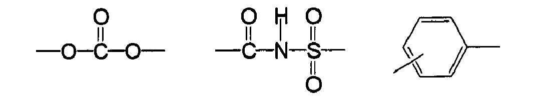

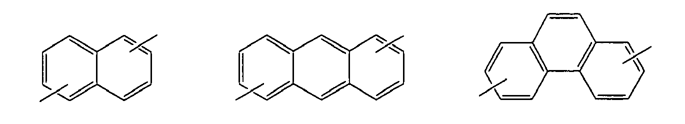

Further, A is a hydrophilic group and represents -OR⁵, -COR⁵, -CO₂R⁹, -CON(R⁵)(R⁶), -N(R⁵)(R⁶), -NHCOR⁸, -NHCO₂R⁵, -OCON(R⁵)(R⁶), -NHCON(R⁵)(R⁶), -SO₃R⁹, -OSO₃R⁹, -SO₂R⁸, -NHSO₂Rₐ⁸, -SO₂N(Rₐ⁵)(Rₐ⁶), -PO₃(R⁹)(R¹⁰), -OPO₃(R⁹)(R¹⁰), -PO₂(R⁸)(R⁹), -N(R⁵)(R⁶)(R⁷) or -N(R⁵)(Rₐ⁶)(R⁷)(R¹¹) in which R⁵, R⁶, R⁷ each independently represent a hydrogen atom or a linear, branched, or cyclic alkyl group having 1 to 8 carbon atoms, R⁸ represents a linear, branched, or cyclic alkyl group having 1 to 8 carbon atoms, R⁹, R¹⁰ each independently represent a hydrogen atom or a linear, branched, or cyclic alkyl group having 1 to 8 carbon atom, alkali metal, alkaline earth metal, or onium, R¹¹ represents a linear, branched, or cyclic alkyl group having 1 to 8 carbon atoms, a halogen atom, inorganic anion, or organic anion. Further, for -CON(R⁵)(R⁶), -OCON(R⁵)(R⁶), -NHCON(R⁵)(R⁶), -SO₂N(R⁵)(Rₐ⁶), -PO₃(R⁹)(R¹⁰), -OPO₃(R⁹)(R¹⁰), -PO₂(R⁸)(R⁹), -N(R⁵)(R⁶)(R⁷), or -N(R⁵)(R⁶)(R⁷)(R¹¹), R⁵ to R¹¹ may join to each other to form a ring, or the formed ring may be heterocyclic ring containing a hetero atom such as an oxygen atom, sulfur atom, nitrogen atom, or the like. R⁵ to R¹¹ may further have each a substituent. The substituent that can be introduced includes those also mentioned as the substituents that can be introduced in a case where R¹ to R⁴ each represents the alkyl group.

R⁵, R⁶, or R⁷ specifically includes preferably a hydrogen atom, a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, an 1-methylbutyl group, an iso-hexyl group, a 2-ethylhexyl group, an 2-methylhexyl group, a cyclopentyl group, etc.
R⁸ includes preferably a methyl group, an ethyl group, propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an iso-hexyl group, a 2-ethylhexyl group, a 2-methylhexyl group, a cyclopentyl group, etc.
R⁹, R¹⁰ include specifically alkyl groups mentioned for R⁵ to R⁸. In addition, they include a hydrogen atom; an alkali metal such as lithium, sodium, and potassium; an alkaline earth metals such as calcium and barium, or an onium such as ammonium, iodonium, and sulfonium.
R¹¹ includes specifically the alkyl groups mentioned for R⁵ to R⁸. In addition, it also includes a hydrogen atom; a halogen atom such as fluorine atom, chlorine atom, and bromine atom; an inorganic anion such as nitrate anion, sulfate anion, tetrafluoro borate anion, hexafluoro phosphate anion, and an organic anion such as methane sulfonate anion, trifluoro methane sulfonate anion, nonafluoro methane sulfonate anion, and p-toluene sulfonate anion.
Further, such A includes, preferably, -CO₂⁻Na⁺, -CONH₂, -SO₃⁻Na⁺, -SO₂NH₂, -PO₃H₂, etc.

The molecular weight of the specified hydrophilic polymer (A) is, preferably, from 1,000 to 1,000,000, more preferably, from 1,000 to 500,000 and, most preferably, from 1,000 to 200,000.

For describing the specified hydrophilic polymer usable suitably in the invention, specific examples of the partial structure represented by the formula (I-a) situated on the terminal end of the polymer, and the structural unit represented by the formula (I-b) constituting the main chain of the polymer are shown but the invention is not restricted to them.
At first, specific examples of the structure shown by the formula (I-a) are shown.

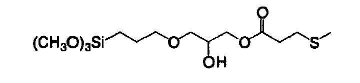

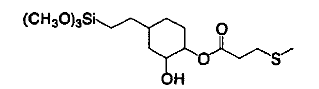

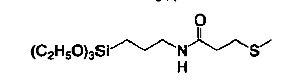

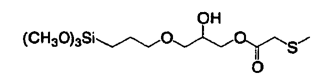

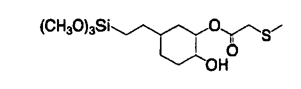

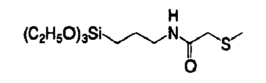

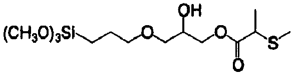

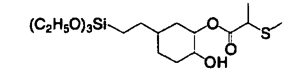

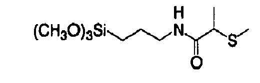

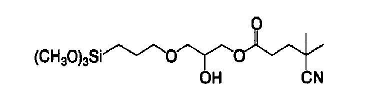

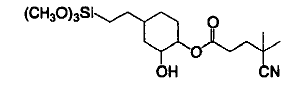

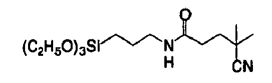

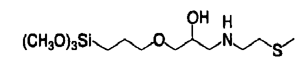

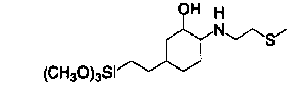

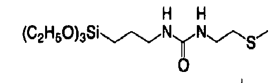

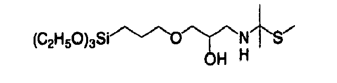

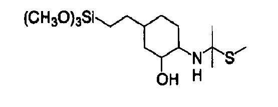

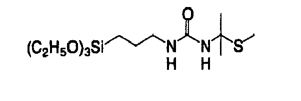

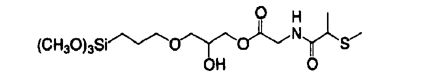

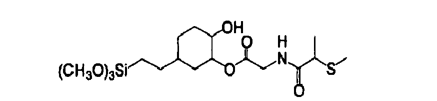

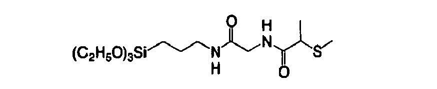

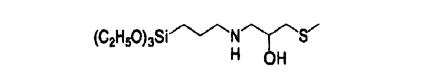

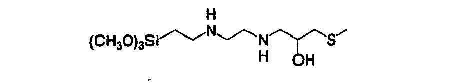

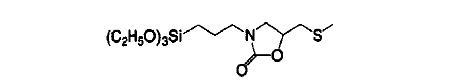

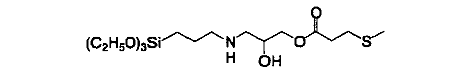

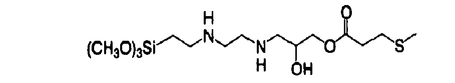

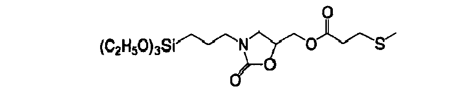

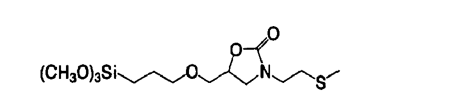

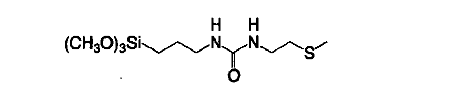

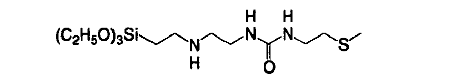

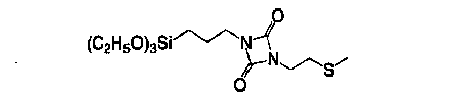

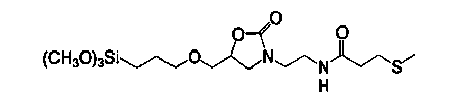

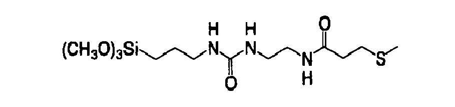

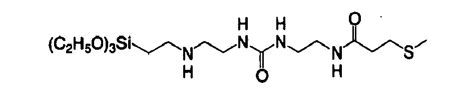

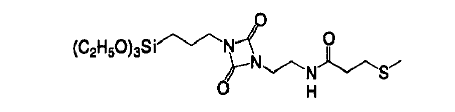

Then, specific examples of the structural unit shown by the formula (I-b) are shown.

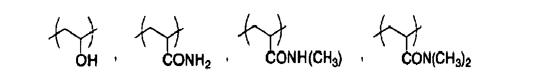

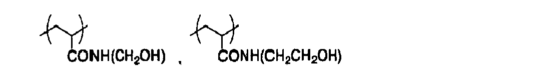

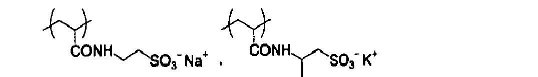

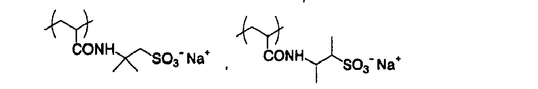

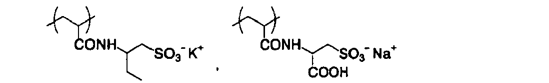

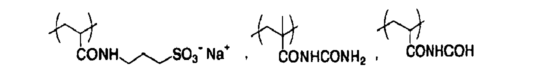

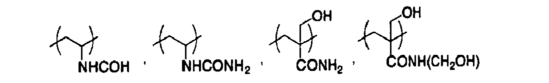

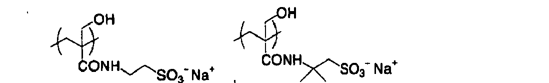

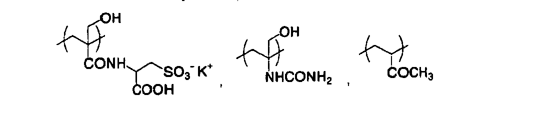

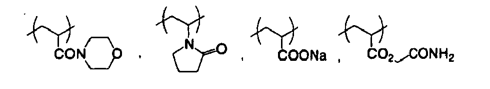

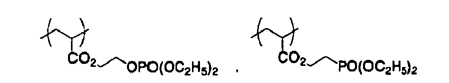

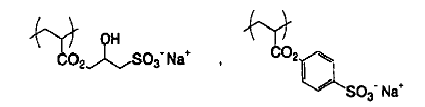

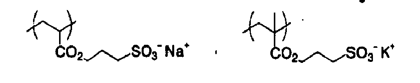

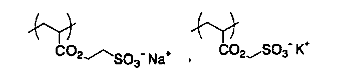

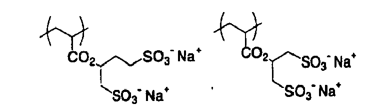

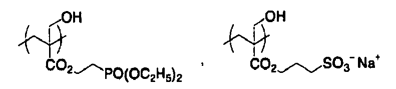

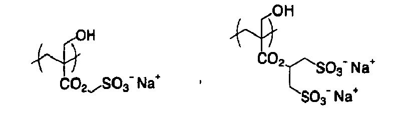

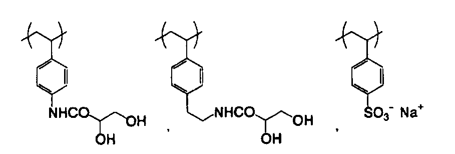

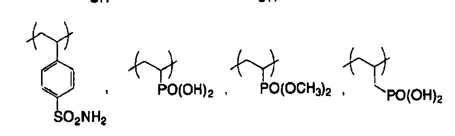

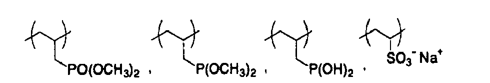

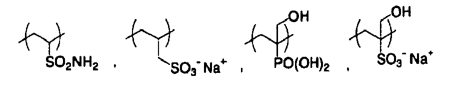

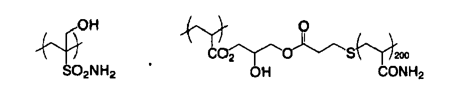

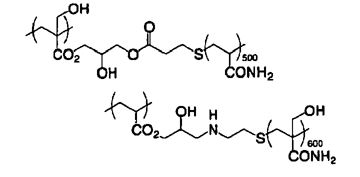

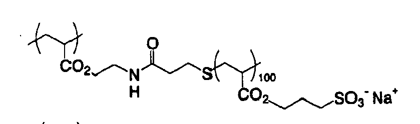

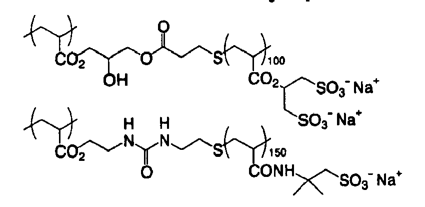

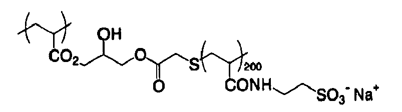

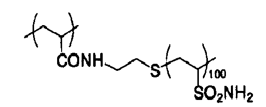

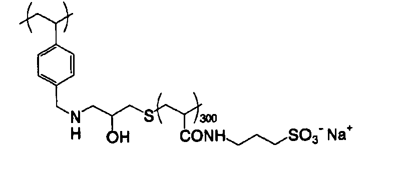

Then, preferred specific examples of the specified hydrophilic polymer (A) constituted with the combination of the formulae (I-a) and (I-b) [Exemplified compound (1) to (50)] are shown. The invention is not restricted to them. Further, Mw in the following formulae means a molecular weight.

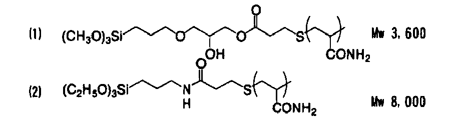

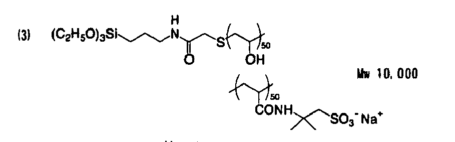

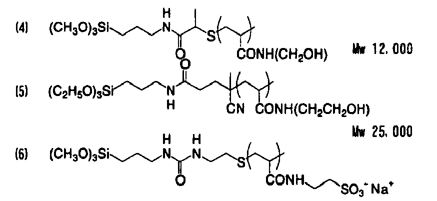

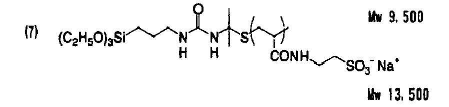

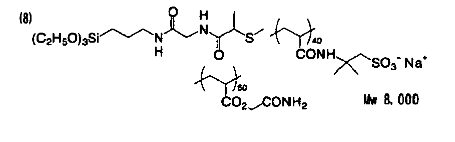

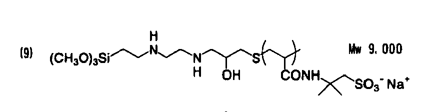

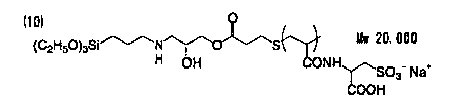

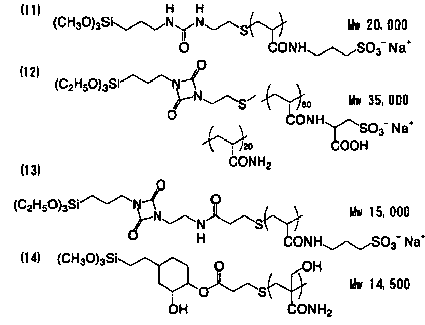

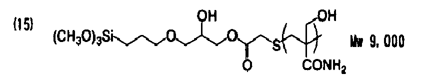

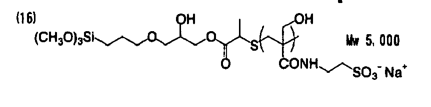

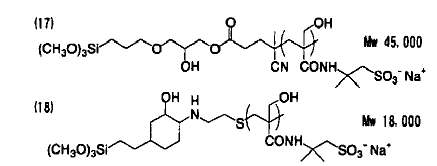

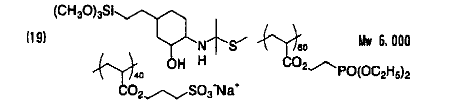

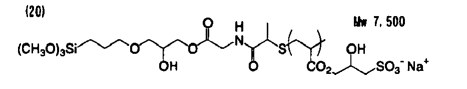

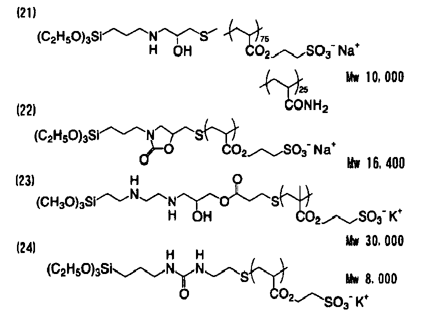

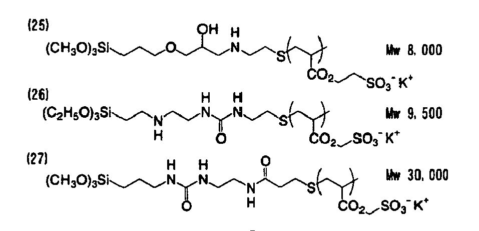

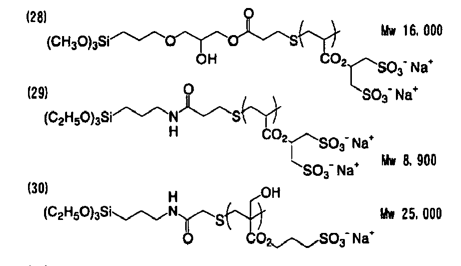

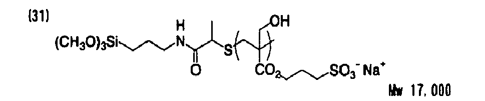

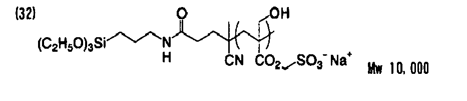

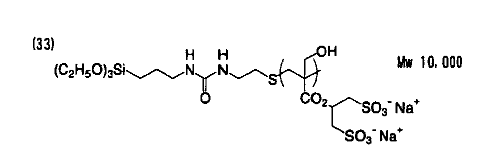

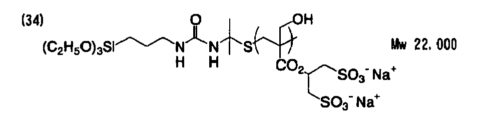

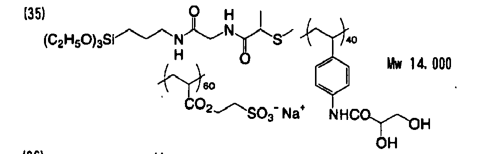

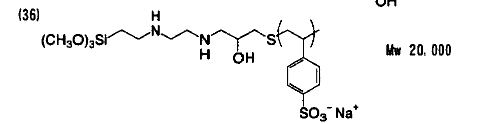

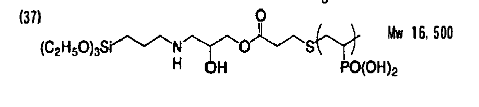

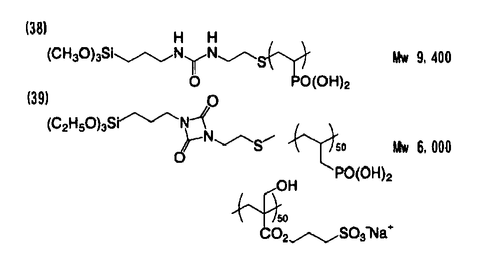

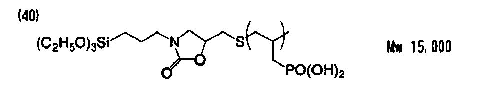

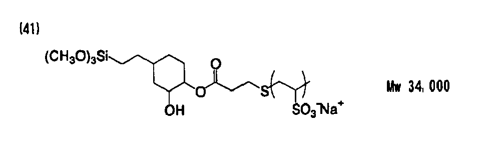

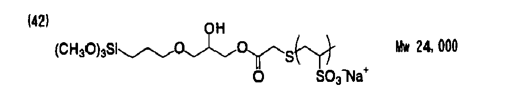

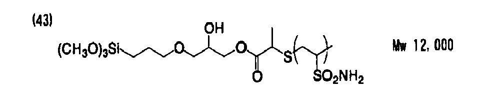

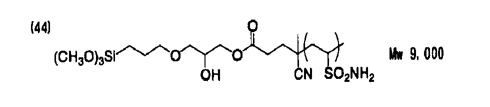

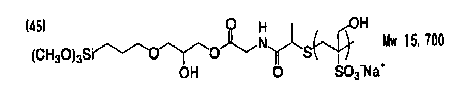

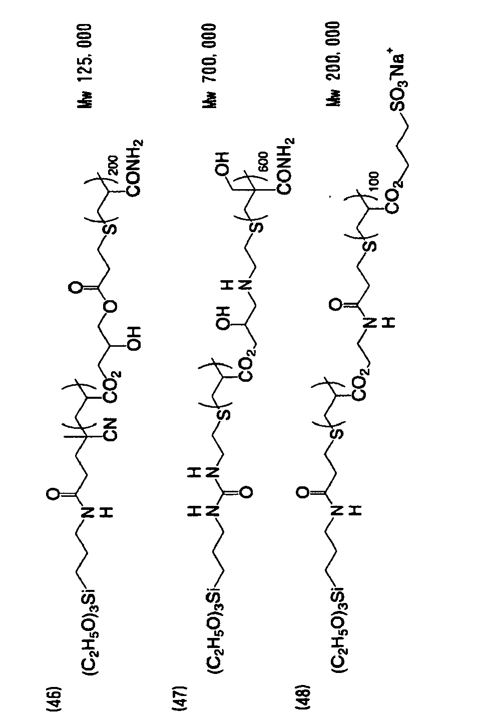

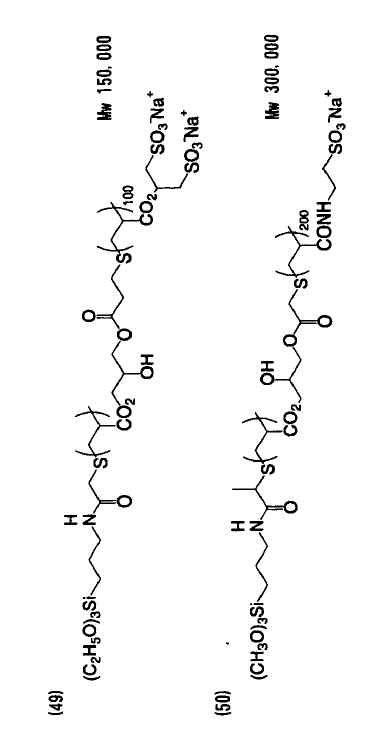

[Synthesis Method]
The specified hydrophilic polymer (A) according to the invention can be synthesized by a known method. In the invention radical polymerization is conducted, preferably, for example, by using a monomer having a structural unit capable of radical polymerization as represented by the formula (I-b) and a compound having a chain transfer function or a radical initiator in the radical polymerization in accordance with the following scheme. In a case of using a compound having the reactive group as a compound having the chain transfer function or a compound having the radical initiation function, a polymer in which the reactive group is introduced to the terminal and the polymer chain in the radical polymerization can be synthesized.
Such reaction mode is not particularly restricted, and bulk reaction, solution reaction, suspension reaction, etc. may be conducted under the presence of a radical polymerization initiator or under irradiation of a high pressure mercury lamp.
Then, a functional group represented by the formula (I-a) is introduced to the position of the reactive group.
Further, in the polymerizing reaction, for controlling the introduction amount of the structural unit having the reactive group thereby effectively suppressing the homopolymerization of the same and the structural unit (I-b), a polymerization process using, for example, a divisional addition method or a sequential addition method of an unsaturated compound, etc. is preferably conducted.

The reaction ratio of the structural unit (I-b) relative to the structural unit having the reactive group to be introduced to the terminal end is not particularly restricted. With a view point of suppressing the side reaction or improvement in the yield of the hydrolysable silane compound, the structural unit (I-b) based on one mol of the reactive structural unit on the terminal end is, preferably, within a range from 0.5 to 50 mol, more preferably, within a range from 1 to 45 mol and most preferably, within a range from 5 to 40 mol.
Further, the monomer capable of radical polymerization as the structural unit represented by the formula (I-b) may be homopolymerized or it may be a copolymer of two or more of them.

Each of the compounds described above for synthesizing the specified hydrophilic polymer (A) of the invention is commercially available. Further, it can also be synthesized easily.
As the radical polymerization method for synthesizing specified hydrophilic polymer (A), any of known methods can be used. General radical polymerization methods are described, for example, in "New Polymer Experimental Learning 3, Synthesis and Reaction of Polymer (I) (edited by The Society of Polymer Science, Kyoritsu Shuppan Co., Ltd.)", "New Experimental Chemistry Course 19, Polymer Chemistry (I) (edited by The chemical Society of Japan, Maruzen Co., Ltd.)", and "Material Technology course, Polymer Synthesis Chemistry (Tokyo Denki University Press)" which can be applied.

Further, the specified hydrophilic polymer described above may be a copolymer with other monomers to be described later. Other monomers to be used include, for example, known monomers such as acrylate esters, methacrylate esters, acrylamides, methacrylamides, vinyl esters, styrens, acrylic acid, methacrylic acid, acrylonitrile, maleic acid anhydride, and maleic imide. By copolymerizing such monomers, various physical properties such as film forming property, film strength, hydrophilic property, hydrophobic property, solubility, reactivity, and stability can be improved.

Specific examples of the acrylate esters includes, methyl acrylate, ethyl acrylate, (nor i-)propyl acrylate, (n-, i-, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylol propane monoacrylate, pentaerythritol monoacrylate, benzyl acrylate, metoxybenzyl acrylate, chlorobenzyl acrylate, hydroxybenzyl acrylate, hydroxyphenetyl acrylate, dihydroxyphenetyl acrylate, fulfuryl acrylate, tetahydrofulfuryl acrylate, phenyl acrylate, hydroxyphenyl acrylate, chlorophenyl acrylate, sulfamoylphenyl acrylate, 2-(hydroxyphenyl carbonyloxy) ethyl acrylate, etc.

Specific examples of the methacrylate esters include methyl methacrylate, ethyl methacrylate, (n- or i-)propyl methacrylate, (n-, i-, sec- or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, aryl methacrylate, trimethylol propane monomethacrylate, pentaerythritol monomethacrylate, benzyl methacrylate, methoxybenzyl methacrylate, chlorobenzyl methacrylate, hydroxybenzyl methacrylate, hydroxyphenetyl methacrylate, dihydroxyphenetyl methacrylate, fulfuryl methacrylate, tetrahydrofulfuryl methacrylate, phenyl methacrylate, hydroxyphenyl methacrylate, chlorophenyl methacrylate, sulfamoyl phenyl methacrylate, 2-(hydroxyphenyl carbonyloxy) ethyl methacrylate, etc.

Specific examples of the acrylamides include, acrylamide, N-methyl acrylamide, N-ethyl acrylamide, N-propyl acrylamide, N-butyl acrylamide, N-benzyl acrylamide, N-hydroxyethyl acrylamide, N-phenyl arcylamide, N-tolyl acylamide, N-(hydroxyphenyl) acrylamide, N-(sulfamoylphenyl) acrylamide, N-(phenylsulfonyl) acrylamide, N-(tolylsulfonyl) acrylamide, N,N-dimethyl acrylamide, N-methyl-N-phenol acrylamide, N-hydroxyethyl-N-methyl acrylamide, etc.

Specific examples of the methacrylamides include methacrylamide, N-methyl methacrylamide, N-ethyl methacrylamide, N-propyl methacrylamide, N-butyl methacrylamide, N-benzyl methacrylamide, N-hydroxyethyl methacrylamide, N-phenyl methacrylamide, N-tolyl methacrylamide, N-(hydroxyphenyl) methacrylamide, N-(sulfamoylphenyl) methacrylamide, N-(phenylsulfonyl) methacrylamide, N-(tolylsulfonyl) methacrylamide, N,N-dimethyl methacrylamide, N-methyl-N-phenyl methacrylamide, N-hydroxyethyl-N-methyl methacrylamide, etc.

Specific examples of the vinyl esters include vinyl acetate, vinyl butyrate, vinyl benzoate, etc.
Specific examples of the styrenes includes, styrene, methyl styrene, dimethyl styrene, trimethyl styrene, ethyl styrene, propyl styrene, cyclohexyl styrene, chloromethyl styrene, trifluoromethyl styrene, ethoxymethyl styrene, acetoxymethyl styrene, methoxy styrene, dimethoxy styrene, chlorostyrene, dichloro styrene, bromo styrene, iodo styrene, fluoro styrene, carboxy styrene, etc.

It is necessary that the ratio of other monomers used in the synthesis of copolymer is in such an amount sufficient to improve the various physical properties. However, in a case where the ratio is excessively large, the function as the hydrophilic film becomes insufficient and a sufficient merit of adding the specified hydrophilic polymer (A) can not sometimes be obtained. Accordingly, a preferred total ratio of other monomers in the specified hydrophilic polymer (A) is 80 mass% or less and, more preferably, 50 mass% or less.

The specified hydrophilic polymer (A) according to the invention is incorporated to the non-volatile ingredients of the hydrophilic composition of the invention within a range, preferably, from 5 to 95 mass%, more preferably, from 15 to 90 mass% and, most preferably, from 20 to 85 mass% with a view point of the curability and the hydrophilicity. They may be used each alone or two or more of them may be used in combination.

[(B) Alkoxide compound of element selected from Si, Ti, Zr, Al]
The alkoxide compound comprising the element selected from Si, Ti, Zr, and Al as the specified alkoxide (B) used in the invention is a hydrolyzing polymerizable compound having a polymerizable functional group in the structure and functioning as a crosslinker.
The specified alkoxide (B) is a compound represented by the following formula (II) and upon forming the crosslinked structure for curing the hydrophilic film, the specified hydrophilic polymer (A), and the specified alkoxide (B) represented by the formula (II) are mixed, coated on the surface of a support, heated and dried.

(R¹²)ₖ-X-(OR¹³)₄₋ₖ Formula (II)

In the formula (II), R¹² represents a hydrogen atom, an alkyl group, or an aryl group. R¹³ represents an alkyl group or an aryl group. X represents Si, Al, Ti, or Zr. k represents an integer of 0 to 2. The number of carbon atoms in a case where R¹² and R¹³ each represents the alkyl group is preferably from 1 to 4. The alkyl group or aryl group may also have a substituent. The substituent that can be introduced includes a halogen atom, an amino group, a mercapto group, etc. The compound is a low molecular weight compound and the molecular weight is preferably 1,000 or less.

While specific examples of the specified alkoxide (B) represented by the formula (II) are shown, but the invention is not restricted to them. In a case of example where X is Si, that is, those containing silicon in the specified alkoxide include, for example, trimethoxy silane, triethoxy silane, tripropoxy silane, tetramethoxy silane, tetraethoxy silane, tetrapropoxy silane, methyl trimethoxy silane, ethyl triethoxy silane, propyl trimethoxy silane, methyl triethoxy silane, ethyl triethoxy silane, propyl triethoxy silane, dimethyl dimethoxy silane, diethyl diethoxy silane, γ-chloropropyl triethoxy silane, γ-mercaptopropyl trimethoxy silane, γ-mercaptopropyl triethoxy silane, γ-aminopropyl triethoxy silane, phenyl trimethoxy silane, phenyl triethoxy silane, phenyl tripropoxy silane, diphenyl dimethoxy silane, and diphenyl diethoxy silane. Among them, particularly preferred examples include tetramethoxy silane, triethoxy silane, methyltrimethoxy silane, ethyltrimethoxy silane, methyltriethoxy silane, ethyl triethoxy silane, dimethyl diethoxy silane, phenyl trimethoxy silane, phenyl triethoxy silane, diphenyl dimethoxy silane, diphenyl diethoxy silane, etc.

In a case of examples where X is Al, that is, those containing aluminum in the specified alkoxide include, for example, trimethoxy aluminate, triethoxy aluminate, tripropoxy aluminate, and tetraethoxy aluminate.
In a case of examples where X is Ti, that is, those containing titanium include, for example, trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate, and phenyltriethoxy titanate.
In a case of examples where X is Zr, that is, those containing zirconium include, for example, zirconates corresponding to the compounds exemplified as those containing titanium.
Among them, alkoxides in which X is Si are preferred with the view point of the film forming property.

The specified alkoxides (B) according to the invention may be used each alone or two or more of them may be used in combination.
The specified alkoxide (B) is used as the non-volatile ingredient in the hydrophilic composition of the invention within a range, preferably, from 5 to 80 mass% and, more preferably, from 10 to 70 mass%.

[(C) Catalyst]
In the hydrophilic composition of the invention, the specified hydrophilic polymer (A) and, further, the crosslinking ingredient such as the specified alkoxide (B) are at first dissolved in a solvent and stirred thoroughly. Thus, the ingredients are hydrolyzed and polycondensed to form an organic-inorganic composite sol solution. Then, the organic-inorganic composite sol solution forms a hydrophilic film having high hydrophilicity and high film strength. In the preparation of the organic-inorganic composite sol solution, an acidic catalyst or a basic catalyst is preferably used together for promoting the hydrolysis and the polycondensating reaction. In a case of intending to obtain a practically preferred reaction efficiency, incorporation of such a catalyst (C) (acidic catalyst or basic catalyst) is preferred.

As the catalyst (C) used in the invention, a catalyst that promotes the reaction of hydrolyzing and polycondensating the specified alkoxide compound (B) and forming the bonding with the specified hydrophilic polymer (A) is selected. Specifically, the acidic or basic compound is used as it is, or the acidic or the basic compound is used being dissolved in a solvent such as water or alcohol (hereinafter they are collectively referred to as the acid catalyst or the basic catalyst). The concentration when the acidic or the basic compound is dissolved in the solvent is not particularly restricted and may be selected appropriately in accordance with the characteristic of the acidic or basic compound used, a desired content of the catalyst, etc. In a case where the concentration of the acidic or basic compound constituting the catalyst is high, the rate of hydrolysis and polycondensation tends to increase. However, in a case of using a basic catalyst at a high concentration, precipitates are sometimes formed in a sol solution. Therefore, in a case of using the basic catalyst, the concentration is preferably 1N or less based on a concentration in an aqueous solution.

There is no particular restriction on the kind of the acidic catalyst or the basic catalyst. In a case where it is necessary to use a catalyst at high concentration, a catalyst constituted with an element that scarcely remains in the coating film after drying is preferred. Specifically, the acidic catalyst includes hydrogen halide such as hydrochloric acid, nitric acid, sulfuric acid, sulfurous acid, hydrogen sulfide, perchloric acid, hydrogen peroxide, carbonic acid, carboxylic acid such as formic acid or acetic acid, a substituted carboxylic acid in which R in the structural formula represented by RCOOH is substituted for other element or a substituent, and a sulfonic acid such as benzene sulfonic acid. The basic catalyst includes, an ammoniacal base such as aqueous ammonia, and an amine such as ethylamine or aniline. Other catalyst includes a metal compound such as acetyl acetonate complex ofTi, SiCl₄, and Zr(OR)₄.

The catalyst (C) according to the invention is used as a non-volatile ingredient in the hydrophilic composition of the invention within a range, preferably, from 0 to 50 mass% and, more preferably, from 5 to 25 mass%. Further, the catalyst (C) may be used alone or two or more of them may be used in combination.

In the hydrophilic composition of the invention, various compounds can be used together in accordance with the purpose in addition to the ingredients (A) and (B) as the essential ingredient, and the catalyst (C) used optionally together so long as they do not impair the effect of the invention. The ingredients that can be used together will describe below.

### [Surfactant]

In the invention, a surfactant is used preferably for improving the film surface state of the hydrophilic composition. The surfactant includes, for example, nonionic surfactants, anionic surfactants, cationic surfactants, amphoteric surfactants and, fluoro surfactants.

The nonionic surfactants used in the invention are not particularly restricted and those known so far can be used. They include, for example, polyoxyethylene alkyl ethers, polyoxyethylene alkyl phenyl ethers, polyoxyethylene polystylyl phenyl ethers, polyoxyethylene polyoxypropylene alkyl ethers, glycerine fatty acid partial esters, sorbiton fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerine fatty acid partial esters, polyoxyethylenated castor oils, polyoxyethylene glycerin fatty acid partial esters, fatty acid diethanol amides, N,N-bis-2-hydroxyalkylamines, polyoxyethylene alkylamine, triethanolamine fatty acid ester, trialkylamine oxide, polyethylehne glycol, and copolymer of polyethylene glycol and polypropylene glycol.

The anionic surfactants used in the invention are not particularly restricted and those known so far can be used. They include, for example, fatty acid salts, abietic acid salts, hydroxyl alkane sulfonic acid salts, alkane sulfonic acid salts, dialkylsulfo succinate ester salts, linear alkyl benzene sulfonic acid salts, branched alkyl benzene sulfonic acid salts, alkyl naphthalene sulfonic acid salts, alkylphenoxy polyoxyethylene propyl sulfonic acid salts, polyoxyethylene alkylsulfophenyl ether salts, sodium salt of N-methyl-N-oleyl taulate, disodium salt of N-alkyl sulfo succinic acid monoamide, petroleum sulfonate salt, sulfated tallow oil, sulfate ester salts of fatty acid alkyl ester, alkyl sulfate ester salts, polyoxyethylene alkyl ether sulfate ester salts, fatty acid monoglyceride sulfate ester salts, polyoxyethylene alkylphenyl ether sulfate ester salts, polyoxyethylene stylylphenyl ether sulfate ester salts, alkyl phosphate ester salts, polyoxyethylene alkyl ether phosphate ester salts, polyoxyethylene alkylphenyl ether phosphate ester salts, partial saponified products of styrene/maleic acid anhydride copolymer, partial saponified products of olefin/maleic acid anhydride copolymer, and formalin condensates of naphthalene sulfonic acid salt.

The cationic surfactants used in the invention are not particularly restricted and those known so far can be used. They include, for example, alkylamine salts, quaternary ammonium salts, polyoxyethylene alkyl amine salts, and polyethylene polyamide derivatives.
The amphoteric surfactants used in the invention are not particularly restricted and those known so far can be used. They include, for example, caroboxy betains, amino carboxylic acids, sulfobetains, amino sulfate esters, and imidazolines.
In the surfactants described above "polyoxyethylene" may also be read as "polyoxyalkylene" such as polyoxymethylene, polyoxypropylene, polyoxybutylene, and such surfactants may also be used in the invention.

Further preferred surfactants include fluoro surfactants containing perfluoroalkyl groups in the molecule. Such fluoro-surfactants include, for example, anion types such as perfluoroalkyl carboxylic acid salt, perfluoroalkyl sulfonic acid salt, and perfluoroalkyl phosphate esters; amphoteric type such as perfouoroalkyl betain; cationic type such as perfluoroalkyl trimethyl ammonium salt; and nonion type such as perfluoroalkyl amine oxide, perfluoroalkyl ethylene oxide adduct, oligomers containing perfluoroalkyl group and hydrophilic group, oligomers containing perfluoroalkyl group and oleophilic group, oligomers containing perfluoroalkyl group, hydrophilic group, and oleophilic group, and urethanes containing perfluoroalkyl groups and oleophilic groups. Further, they also include, preferably those fluoro-surfactants as described in each of the publications of JP-A Nos. 62-170950, 62-226143, and 60-168144.
The surfactant is used as the non-volatile ingredient in the hydrophilic composition of the invention within a range, preferably, from 0.001 to 10 mass% and, more preferably, from 0.01 to 5 mass%. The surfactants may be used each alone or two or more of them may be used in combination.

[Fine inorganic particles]
The hydrophilic composition of the invention may also contain fine inorganic particles for improving the strength and improving the hydrophilicity as the cured film of the formed hydrophilic film. The fine inorganic particles include preferably, for example, silica, alumina, magnesium oxide, titanium oxide, magnesium carbonate, calcium alginate, or a mixture thereof.
The fine inorganic particle has an average grain size, preferably, from 5 nm to 10 nm and, more preferably, from 0.5 to 3 µm. Within the range described above, the particles are dispersed stably in the hydrophilic film and can maintain the strength of the film sufficiently to form a film of excellent hydrophilicity. The fine inorganic particles described above are available easily as commercial products such as colloidal silica dispersions.

The fine inorganic particles of the invention are used as the non-volatile ingredient in the hydrophilic composition of the invention within a range, preferably, from 20 mass% or less and, more preferably, from 10mass% or less. The fine inorganic particles may be used each alone or two or more of them may be used combination.

[Preparation of hydrophilic composition]
The hydrophilic composition can be prepared by dissolving the specified hydrophilic polymer (A) and the specified alkoxide (B) and, more preferably, the catalyst (C) into a solvent such as ethanol, then adding the catalyst described above and stirring them. It is preferred that the reaction temperature is from room temperature to 80°C and the reaction time, that is, the time for continuing stirring is preferably within a range from 1 to 72 hours. Hydrolysis and polycondensation of both of the ingredients can be proceded by the stirring to obtain an organic-inorganic composite sol solution.

There is no particular restriction for the solvent used upon preparation of the hydrophilic composition containing the specified hydrophilic polymer (A) and the specified alkoxide (B) so long as the solvent can uniformly dissolve or disperse them. For example, an aqueous solvent such as methanol, ethanol, or water is preferred.

As described above, a sol-gel method is utilized for the preparation of an organic-inorganic composite sol solution (hydrophilic composition), for forming the hydrophilic film by the hydrophilic composition of the invention. The sol-gel method specifically, for example, in books such as "Science for Sol-Gel Method" written by Sumio Sakuhana, published from AGNE Shofusha Co. (1988), "Functional Thin Film Preparation Technique by Modern Sol-Gel Method" written by Ken Hirashima, published from Sogo Gijutsu center (1992), etc. and the method described in them can be applied to the preparation of the hydrophilic composition in the invention.
The hydrophilic member of the invention can be obtained by coating a solution containing the hydrophilic composition of the invention as described above on an appropriate support and drying. That is, the hydrophilic member of the invention has a hydrophilic film formed by coating the hydrophilic composition of the invention on a substrate and heating and drying the same.
In the formation of the hydrophilic film, heating and drying after coating the solution containing the hydrophilic composition are conducted under the conditions, preferably, at a temperature within a range from 50 to 200°C for a time of about 2 min to one hour and, more preferably, at a temperature within a range from 80 to 160°C for a time of 5 to 30 min with a view point of efficiently forming the crosslinked structure at high density. Further, known means, for example, a drying machine having a temperature control function is preferably used as heating means.

[Substrate]
For the substrate that can be used as a support for the hydrophilic member of the invention, in a transparent substrate intended for anti-staining and/or anti-fogging effect, for instance, those substrates capable permitting a visible light to transmit therethrough such as inorganic substrates, for example, glass or glass incorporating an inorganic compound layer or a transparent plastic or transparent plastic layers containing inorganic compound layer can be utilized suitably as the material therefor.

Referring specifically to the inorganic substrates, they include usual glass plates, laminated glass plates containing a resin layer, gas layer, vacuum layer, or the like, and various kinds of glass plates containing reinforcing agents or colorants.
The glass plates containing the inorganic compound layer include those glass plates having inorganic compound layers formed, for example, of metal oxides such as silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide, and ITO (Indium Tin Oxide); metal halides such as magnesium fluoride, calcium fluoride, lanthanum fluoride, cerium fluoride, lithium fluoride, and thorium fluoride.

The inorganic compound layer may have a single layered or a multi-layred structure. The inorganic compound layer can maintain the optical transmittance by the thickness thereof. Further, the layer can also function as an anti-reflective layer. For the method of forming the inorganic compound layer, known methods can be applied and they include, for example, coating method such as dip coating, spin coating, flow coating, spray coating, roll coating, and gravure coating, physical vapor deposition methods (PVD) such as vacuum vapor deposition, reactive vapor deposition, ion beam assisted method, sputtering, and ion plating, and gas phase methods including chemical vapor deposition (CVD).

Further, among the organic substrates such as made of plastics, transparent plastic substrate include those substrates comprising various plastic materials having visible light permeability. Particularly, substrates used for optical members are selected while considering optical characteristics such as transparency, refractive index, and dispersibility. Then, they are selected depending on the purpose of use while considering various physical properties including strength, for example, impact resistance and flexibility, heat resistance, weather proofness, and durability with the view point described above. Such materials include preferably polyolefin resins such as polyethylene and polypropylene, polyester resins such as polyethylene terephthalate and polyethylene naphthalate, polyamide resins, polystyrene, polyvinyl chloride, polyimide, polyvinyl alcohol, ethylene vinyl alcohol, acrylic resin, and cellulosic resins such as triacetyl cellulose, diacetyl cellulose, and cellophane. Depending on the purpose of use, they may be used each alone or two or more of them may be used in combination in the form of mixture, copolymer, or laminate.

As the plastic substrate, those in which an inorganic compound layer described for the explanation of the glass plate is formed on a plastic plate may also be used. In this case, the inorganic compound layer can also function as an anti-reflective layer. Also in a case of forming the inorganic compound layer on a plastic plate, it can be formed by the same method as described above for the inorganic substrate.

In a case of forming the inorganic compound layer to a transparent plastic substrate, a hard coat layer may be formed between both of the layers. Since the hardness of the substrate surface is improved and the substrate surface is smoothed by the provision of the hard coat layer, adhesion between the transparent plastic substrate and inorganic compound layer is improved, the scratch resistance can be improved, and occurrence of cracks to the inorganic compound layer caused by bending of the substrate can be suppressed. By the use of such a substrate, mechanical strength of the hydrophilic member can be improved. The material of the hard coat layer is not particularly restricted so long as it has transparency, appropriate strength, and mechanical strength. For example, resins curable by the irradiation of ionic irradiation rays or UV-rays or thermosetting resins can be used. Particularly, UV-ray curable acrylic resin, organic silicon resins and heat setting polysiloxane resin is preferred. It is more preferred that the refractive index of the resins described above is equal with or approximate to the refractive index of the transparent plastic substrate.

The method of forming the hard coat layer as described above is not particularly restricted and an optional method can be adopted so long as the layer can be coated uniformly. Further, while the hard coat layer has a sufficient strength so long as the film thickness is 3 µm or more, it is preferably within a range from 5 to 7 µm in view of the transparency, coating accuracy, and handlability. Furthermore, by mixing and dispersing inorganic particles or organic particles within an average grain size of from 0.01 to 3 µm in the hard coat layer, a light diffusing treatment generally referred to as anti-glaring treatment can be applied. There is no particular restriction on the particles so long as they are transparent, materials of low refractive index are preferred, and silicon oxide and magnesium fluoride are particularly preferred in view of the stability, heat resistance, etc. The light diffusing treatment can be attained also by disposing unevenness to the surface of hard coat layer.

As described above, the hydrophilic member of the invention can be obtained by using a glass plate or plastic plate having the inorganic compound layer as a substrate and forming a hydrophilic surface. Since the hydrophilic member has a hydrophilic film excellent in the hydrophilicity and the durability on the surface, it can provide excellent anti-staining property, particularly, anti-staining property to oil and fat contamination and/or anti-fogging property to the surface of the support member (substrate).
The anti-reflective layer applicable to the surface of the hydrophilic member of the invention is not restricted to the inorganic compound layer described above. For example, a known anti-reflective layer capable of attaining an anti-reflective effect by laminating a plurality of thin films of different reflectivity and refractive index can also be used optionally. Also for the material, either inorganic compounds and/or organic compounds can be used. Particularly, a substrate formed at the surface thereof with an inorganic compound layer as the anti-reflective film can provide an anti-staining and/or anti-fogging member of the invention excellent in the anti-staining and/or anti-fogging function and, further, anti-reflective property at the surface by applying the hydrophilic polymer chain according to the invention to the surface on the side formed with the anti-reflective film. Further, anti-reflective optical functional members having various functions and characteristics can also be obtained using the hydrophilic member of the invention by bonding a functional optical member such as a polarization plate to the member having the constitution described above by means of a bonding technique typically represented by lamination depending on the purpose.

By bonding such anti-reflective member or anti-reflective optical functional member by using a pressure sensitive adhesive or an adhesive to a glass plate, plastic plate or polarization plate of a front screen plate in a display device of various display units (liquid crystal display, CRT display, projection display, plasma display, EL display, etc.), the anti-reflective member can be applied to the display apparatus.

Further, the hydrophilic member of the invention can be applied to various uses that require anti-staining and/or anti-fogging effect in addition to the display apparatus described above. In a case of application to a substrate in which transparency is not necessary for the anti-staining and/or anti-fogging member, for example, metals, ceramics, woods, stones, cements, concretes, textiles, fibers, fabrics, combinations thereof or laminates thereof can also be used suitably as the support substrate, in addition to the transparent substrate described above.

Examples of fields to which the hydrophilic member of the invention can be applied include, in the application use in which the substrate capable of transmitting visible light can be applied, mirrors such as vehicle back mirrors, mirrors for bath rooms, mirrors for lavatories, dentist mirrors, and road mirrors, lenses such as spectacle lens, optical lens, camera lens, endoscope lens, illumination lens, lens for semiconductors, and lens for copiers; prisms, window glass for buildings and life guard towers; window glass for vehicles such as automobiles, railway vehicles, aircrafts, ships, submarine boats, snow cars, ropeway gondolas, play ground gondolas; wind shield glass for vehicles such as automobiles, railway vehicles, aircrafts, ships, submarine boats, snow cars, snow mobiles, motorcycles, ropeway gondolas, playground gondolas and space ships; protective goggle, sports goggle, shield for protective mask, shield for sports masks, helmet shield, glass for frozen food display cases; cover glass for measuring instruments, and films to be appended on the surface of articles described above.
Other applicable uses include building materials, building exterior decoration, building interior decoration, window frame, window glass, structural member, vehicle exterior decoration and coating, exterior decoration for machineries and articles, dust-proof cover and coating, traffic signs, various display devices, advertising tower, road sound proof wall, railway sound proof wall, bridge beam, guard rail exterior decoration and coating, tunnel interior decoration and coating, insulators, solar cell cover, heat collection cover for solar cell water warmer, green house, cover vehicle illumination light, residential facility, toilet, bath tab, wash stand, illumination instruments, illumination cover, kitchen goods, tablewares, dish washers, dish driers, kitchen sink, cooking range, kitchen hood, ventilation fan, and films to be bonded on the surface of the articles described above, housing, parts, exterior decoration, and coating of domestic electric products, housing, parts, exterior decoration, and coating for OA instrument products, as well as films to be bonded to the surface of the articles described above, and their application range is wide.

### Examples

The present invention will be described in detail by way of examples, but the invention is not restricted to them.

### (Synthesis Example 1: Synthesis of specified hydrophilic polymer (1-1))

### 1. Synthesis of hydrophilic polymer (1)

50 g of acrylamide, 1.8 g of 3-mercaptopropionic acid, and 220 g of dimethyl sulfoxide were charged in a 500 ml three-necked flask and, in a nitrogen stream at 65°C, 0.5 g of dimethyl 2,2'-azobis(2-methyl propionate) was added. After being kept at that temperature while being stirred for 6 hours, the mixture was cooled to room temperature. This was poured into 2 litters of methanol,and precipitated solids were separated by filtration and washed with acetone to obtain a hydrophilic polymer (1) having the following structure in which the polymerization degree n of the repetitive units of the polymer chain was about 46. Weight after drying was 50.4 g. The polymer had a weight average molecular weight of 3,400 based on GPC (polyethylene oxide standard).

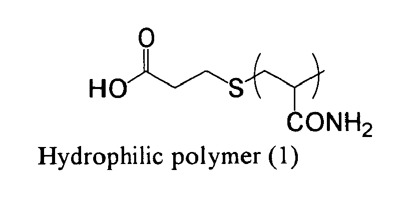

2. (A) Synthesis of specified hydrophilic polymer (1-1)
30 g of the hydrophilic polymer (1) obtained in the Synthesis Example 1, 2.36 g of 3-glycidylpropyl trimethoxy silane, and 150 g of distilled water were charged into a 300 ml three-necked flask and stirred at a room temperature for 3 hours. The mixture was poured into 1.5 liters of methanol, and precipitated solids were separated by filtration and washed with acetone to obtain a specified hydrophilic polymer (1-1) having the following structure. It was confirmed by ¹H-NMR that a trimethoxy silyl group (Si-OCH₃: 3.5 ppm) was introduced into the terminal end.

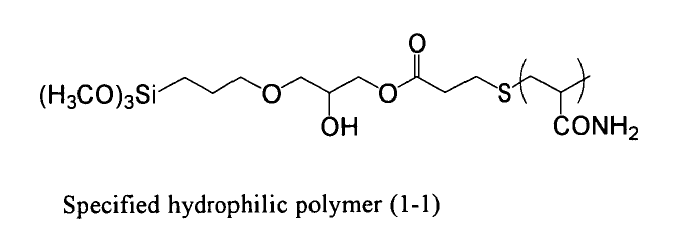

(Synthesis Example 2: (A) Synthesis of specified hydrophilic polymer (1-2))
30 g of the hydrophilic polymer (1) obtained in the Synthesis Example 1, 2.05 g of 3-triethoxysilyl propyl isocyanate, and 150 g of distilled water were charged into a 300 ml three-necked flask and stirred at a room temperature for 2 hours. The mixture was poured into 1.5 liters of methanol, and precipitated solids were separated by filtration and washed with acetone to obtain a specified hydrophilic polymer (1-2) having the following structure. It was confirmed by ¹H-NMR that a triethoxy silyl group (Si-OCH₂CH₃: 3.5 ppm) was introduced into the terminal end.

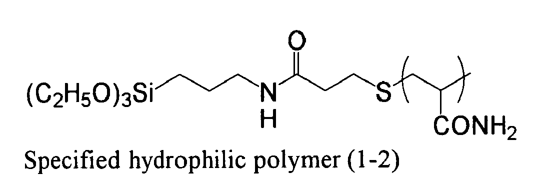

(Synthesis Example 3: (A) Synthesis of specified hydrophilic polymer (2-1))
1. Synthesis of hydrophilic polymer (2)
50 g of potassium 2-sulfoethyl acrylate salt, 0.65 g of 2-aminoethane thiol hydrochloride, and 220 g of distilled water were charged in a 500 ml three-necked flask and, in a nitrogen stream at 50°C, 0.22 g of 2,2'-azobis[2-(2-imidazolin-2-yl)propane] dihydrochloride was added. After being kept at that temperature while being stirred for 6 hours, the mixture was cooled to room temperature. This was poured into 2 litters of dimethyl sulfoxide, precipitated solids were separated by filtration and washed with acetone to obtain a hydrophilic polymer (2) having the following structure in which the polymerization degree n of the repetitive units of the polymer chain was about 35. Weight after drying was 47.6 g. The polymer had a weight average molecular weight of 7,700 based on GPC (polyethylene oxide standard).

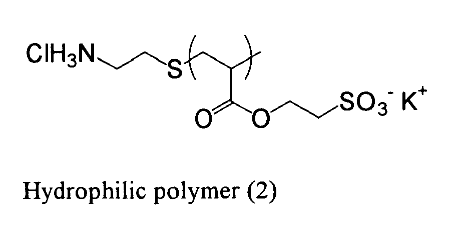

2. (A) Synthesis of specified hydrophilic polymer (2-1)
30 g of the hydrophilic polymer (2) obtained in the Synthesis Example 3, 0.81 g of 3-glycidyl propyl trimethoxy silane and 150 g of distilled water were charged into a 300 ml three-necked flask and stirred at a room temperature for 3 hours. The mixture was poured into 1.5 liters of methanol, and precipitated solids were separated by filtration and washed with acetone to obtain a specified hydrophilic polymer (2-1) having the following structure. It was confirmed by ¹H-NMR that a trimethoxy silyl group (Si-OCH₃: 3.5 ppm) was introduced into the terminal end.

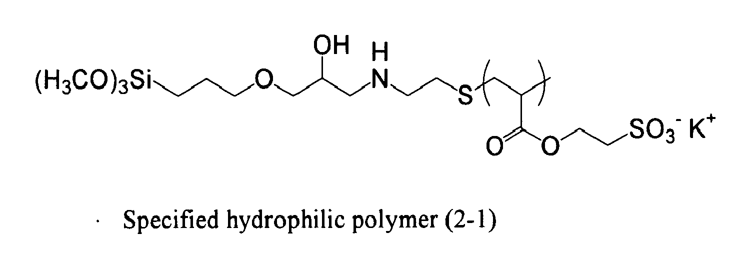

(Synthesis Example 4: (A) Synthesis of specified hydrophilic polymer (2-2))
30 g of the hydrophilic polymer (2) obtained in the Synthesis Example 3, 0.70 g of 3-triethoxysilyl propyl isocyanate, and 150 g of distilled water were charged into a 300 ml three-necked flask and stirred at a room temperature for 2 hours. The mixture was poured into 1.5 liters of methanol,and precipitated solids were separated by filtration and washed with acetone to obtain a specified hydrophilic polymer (2-2) having the following structure. It was confirmed by ¹H-NMR that a triethoxy silyl group (Si-OCH₂CH₃: 3.5 ppm) was introduced into the terminal end.

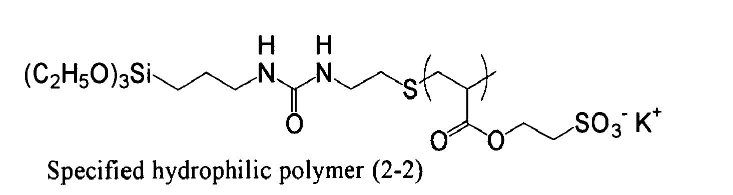

(Examples 1 to 4)
[Preparation of hydrophilic composition (sol-gel solution)]
Ingredients described for the following hydrophilic coating solution composition 1 or 2 were mixed uniformly, and stirred at 20°C for 2 hours to conduct hydrolysis to obtain a sol-like hydrophilic coating solution composition.

### <Hydrophilic coating solution composition 1>

(A) Specified hydrophilic polymer

| | |
|---|---|
| (Compound described in Table 1) | 25 parts by mass |

(B) Specified alkoxide

| | |
|---|---|
| (Compound described in Table 1) | 75 parts by mass |
| Distilled water | 1008 parts by mass |
| Ethanol | 68 parts by mass |

(Examples 5 to 9)
<Hydrophilic coating solution composition 2>
(A) Specified hydrophilic polymer

| | |
|---|---|
| (Compound described in Table 1) | 22 parts by mass |

(B) Specified alkoxide

| | |
|---|---|
| (Compound described in Table 1) | 67 parts by mass |

(C) Catalyst

| | |
|---|---|
| (Compound described in Table 1) | 11 parts by mass |
| Distilled water | 1008 parts by mass |
| Ethanol | 68 parts by mass |

[Preparation of surface hydrophilic member]
The hydrophilic coating solution compositions of Examples 1 to 9 described above were each coated on a glass plate as the substrate (manufactured by Endo Kagaku) such that the coating amount after drying was 2 g/m². Then, they were heated and dried at 100°C for 10 min to form hydrophilic layers on the substrates, to obtain surface hydrophilic members of Examples 1 to 9.

### (Comparative Example 1)

A surface hydrophilic member of Comparative Example 1 was obtained in the same manner as in Example 5 except for using a hydrophilic polymer (3), which is outside of the range of the invention and has the following structure instead of the specified hydrophilic polymer (A) (1-1) of the invention.

### (Comparative Example 2)

A surface hydrophilic member of Comparative Example 2 was obtained by bonding a photocatalyst film (Hydrotect, manufactured by Toyo Toki Co.), instead of the hydrophilic film of the invention, to the support surface used in Example 5 to form a hydrophilic surface.

[Evaluation of surface hydrophilic member]
[Evaluation of friction resistance]
The surface of the obtained hydrophilic member was rubbed 100 times with a non-woven fabric (BEMCOT, manufactured by Asahi Kagaku Seni Co.), and the contact angle (contact angle of a water droplet in air) before and after the rubbing was measured by using a DropMaster 500, manufactured by Kyowa Interface Science Co., Ltd. Evaluation was carried out such that the smaller evaluated that as the change of the contact angle before and after rubbing was, the less the hydrophilicity was lowered and the more excellent the durability was.
A: change of the contact angle before and after rubbing at 1° or less
B: greater than 1° and no greater than 2°
C: greater than 2°

### [Evaluation of anti-fogging property]

Steam was applied to the hydrophilic members obtained as described above during the daytime under a fluorescent lamp in a room for one min and then they were spaced apart from the steam. Then, they were placed in an environment at 25°C and RH 10%, and put under a fluorescent lamp of the same illumination conditions as those described above, and the state of fogging and the change thereof were functionally evaluated into three levels according to the following standards.
A: fogging not observed
B: fogged but recovered within 10 sec and no fogging was observed thereafter
C: fogged and fogging did not clear even after 10 sec elapsed

### [Evaluation of anti-staining property]

Lines were drawn with an oil-based ink (oil-based marker manufactured by Mitsubishi Pencil Co.) on the surface of the hydrophilic members described above, water was applied continuously, and functional evaluation into three levels was carried out as to whether or not the ink was flushed off.
A: ink was flushed-off within one min
B: ink was flushed-off after one min
C: ink was not flushed-off even when 2 to 10 min had elapsed.

The results of evaluation for friction resistance, anti-staining property and anti-fogging property are shown in Table 1.

**[Table 1]**

| | Ingredients for hydrophilic composition | | | Evaluation of performance | | |
|---|---|---|---|---|---|---|
| | (A) Hydrophilic polymer | (B) Specified alkoxide | (C) Catalyst | Friction resistance | Anti-fogging property | Anti-staining property |
| Example 1 | Specified hydrophilic polymer (1-1) | Tetramethoxy silane | - | B | A | A |
| Example 2 | Specified hydrophilic polymer (1-2) | Tetramethoxy silane | - | B | A | A |
| Example 3 | Specified hydrophilic polymer (2-1) | Tetramethoxy silane | - | B | A | A |
| Example 4 | Specified hydrophilic polymer (2-2) | Tetramethoxy silane | - | B | A | A |
| Example 5 | Specified hydrophilic polymer (1-1) | Tetramethoxy silane | Titanium acetyl acetonate | A | A | A |
| Example 6 | Specified hydrophilic polymer (2-1) | Tetramethoxy silane | Nitric acid | A | A | A |
| Example 7 | Specified hydrophilic polymer (1-1) | Tetraethoxy aluminate | Titanium acetyl acetonate | A | A | A |
| Example 8 | Specified hydrophilic polymer (1-1) | Tetraethoxy zirconate | Titanium acetyl aceotnate | A | A | A |
| Example 9 | Specified hydrophilic polymer (1-1) | Tetramethoxy titanate | Titanium acetyl acetonate | A | A | A |
| Comp. Example 1 | Hydrophilic polymer(3) | Tetramethoxy silane | Titanium acetyl acetonate | A | C | C |
| Comp. Example 2 | Photocatalyst film | | | C | A | A |

The structures of hydrophilic polymer (3) and the specified alkoxide (B) described in Table 1 are as shown below.

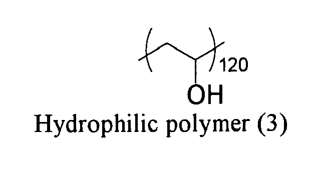

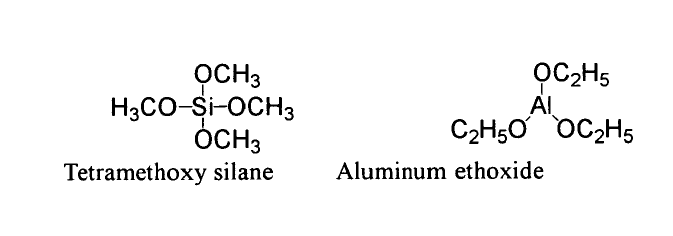

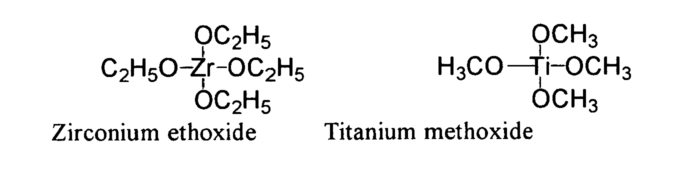

As is apparent from Table 1, the hydrophilic film formed by using the hydrophilic composition of the invention was excellent in anti-staining property and anti-fogging property and was favorable in friction resistance. While on the other hand, in the hydrophilic film of Comparative Example 1 formed by using a hydrophilic composition containing a hydrophilic polymer having a methoxy silyl group on a side chain anti-staining property and anti-fogging property were insufficient. Further while the hydrophilic film of Comparative Example 2 utilizing the photocatalyst film exhibited the anti-staining property and the anti-staining property under the photo-irradiation condition, it did not exhibit these effects without exposure and, moreover, was poor in friction resistance, which was at a level causing practical problems.

The foregoing description of the embodiments of the present invention has been provided for the purposes of illustration and description. It is not intended to be exhaustive or to limit the invention to the precise forms disclosed. Obviously, many modifications and variations will be apps rent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.
All publications, patent applications, and technical standards mentioned in this specification are herein incorporated by reference to the same extent as if each individual publication, patent application, or technical standard was specifically and individually indicated to be incorporated by reference.

## Claims

1. A hydrophilic composition comprising (A) a hydrophilic polymer having a structural unit represented by the following formula (I-b) and having a functional group represented by the following formula (I-a) at a terminal end of the polymer chain, and (B) an alkoxide compound containing an element selected from Si, Ti, Zr and Al: 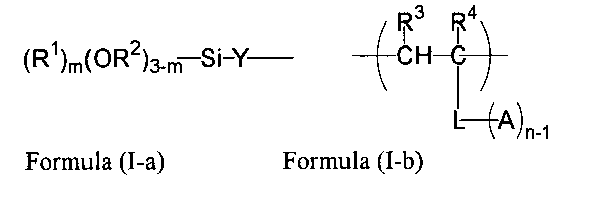 wherein R¹, R², R³, and R⁴ each independently represent a hydrogen atom or a hydrocarbon group having 8 or less carbon atoms; m represents 0, 1, or 2; Y represents a bivalent connection group having one or more of structures selected from the group consisting of -CO₂-, -NHCO-, -NHCONH-, -NHCO₂-, -O- and -NH-; L represents a single bond or an n-valent organic connection group; n represents an integer of from 1 to 4; A represents -OR⁵, -COR⁵, -CO₂R⁹, -CON(R⁵)(R⁶), -N(R⁵)(R⁶), -NHCOR⁸, -NHCO₂R⁵, -OCON(R⁵)(R⁶), -NHCON(R⁵)(R⁶), -SO₃R⁹, -OSO₃R⁹, -SO₂R⁸, -NHSO₂R⁸, -SO₂N(R⁵)(R⁶), -PO₃(R⁹)(R¹⁰), -OPO₃(R⁹)(R¹⁰), -PO₂(R⁸)(R⁹), -N(R⁵)(R⁶)(R⁷), or -N(R⁵)(R⁶)(R⁷)(R¹¹); R⁵, R⁶, and R⁷ each independently represent a hydrogen atom or a linear, branched, or cyclic alkyl group having 1 to 8 carbon atoms; R⁸ represents a linear, branched, or cyclic alkyl group having 1 to 8 carbon atoms; R⁹ and R¹⁰ each independently represent a hydrogen atom, a linear, branched, or cyclic alkyl group having 1 to 8 carbon atoms, an alkali metal, an alkaline earth metal, or an onium; and R¹¹ represents a linear, branched, or cyclic alkyl group having 1 to 8 carbon atoms, a halogen atom, an inorganic anion, or an organic anion.

2. A hydrophilic composition according to claim 1, further comprising a catalyst (C) for promoting a reaction between the hydrophilic polymer (A) and the alkoxide compound (B).

3. A hydrophilic composition according to claim 1, wherein A in the formula (1-b) is one of -CO₂⁻Na⁺, -CONH₂, -SO₃⁻Na⁺, -SO₂NH₂, or -PO₃H₂.

4. A hydrophilic composition according to claim 1, wherein the molecular weight of the hydrophilic polymer (A) is from 1,000 to 1,000,000.

5. A hydrophilic composition according to claim 1, wherein the alkoxide compound (B) is a compound represented by the following formula (II):
(R¹²)ₖ-X-(OR¹³)₄₋ₖ Formula (II)
wherein, in the formula (II), R¹² represents a hydrogen atom, an alkyl group, or an aryl group; R¹³ represents an alkyl group or an aryl group; X represents Si, Al, Ti, or Zr; and k represents an integer of 0 to 2.

6. A hydrophilic member having a hydrophilic film formed by forming, heating, and drying on a support, a film of a hydrophilic composition comprising (A) a hydrophilic polymer having a structural unit represented by the following formula (I-b) and having a functional group represented by the following formula (I-a) at a terminal end of the polymer chain, and (B) an alkoxide compound containing an element selected from Si, Ti, Zr and Al: 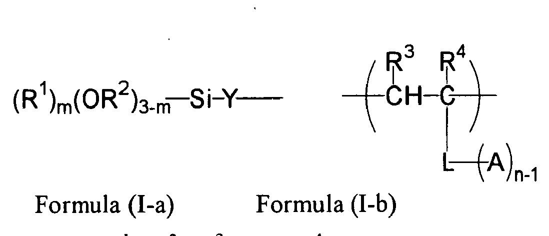 wherein R¹, R², R³, and R⁴ each independently represent a hydrogen atom or a hydrocarbon group having 8 or less carbon atoms; m represents 0, 1, or 2; Y represents a bivalent connection group having one or more of structures selected from the group consisting of -CO₂-, -NHCO-, -NHCONH-, -NHCO₂-, -O- and -NH-; L represents a single bond or an n-valent organic connection group; n represents an integer of 1 to 4; A represents -OR⁵, -COR⁵, -CO₂R⁹, -CON(R⁵)(R⁶), -N(R⁵)(R⁶), -NHCOR⁸, -NHCO₂R⁵, -OCON(R⁵)(R⁶), -NHCON(R⁵)(R⁶), -SO₃R⁹, -OSO₃R⁹, -SO₂R⁸, -NHSO₂R⁸, -SO₂N(R⁵)(R⁶), -PO₃(R⁹)(R¹⁰), -OPO₃(R⁹)(R¹⁰), -PO₂(R⁸)(R⁹), -N(R⁵)(R⁶)(R⁷), or -N(R⁵)(R⁶)(R⁷)(R¹¹); R⁵, R⁶, R⁷ each independently represent a hydrogen atom or a linear, branched, or cyclic alkyl group having 1 to 8 carbon atoms; R⁸ represents a linear, branched, or cyclic alkyl group having 1 to 8 carbon atoms; R⁹ and R¹⁰ each independently represent a hydrogen atom, a linear, branched, or cyclic alkyl group having 1 to 8 carbon atoms, an alkali metal, an alkaline earth metal, or an onium; and R¹¹ represents a linear, branched, or cyclic alkyl group having 1 to 8 carbon atoms, a halogen atom, an inorganic anion, or an organic anion.

7. A hydrophilic member according to claim 6, wherein the hydrophilic composition further comprises a catalyst (C) for promoting a reaction between the hydrophilic polymer (A) and the alkoxide compound (B).

8. A hydrophilic member according to claim 6, wherein A in the formula (1-b) is one of -CO₂⁻Na⁺, -CONH₂, -SO₃⁻Na⁺, -SO₂NH₂, or -PO₃H₂.

9. A hydrophilic member according to claim 6, wherein the molecular weight of the hydrophilic polymer (A) is from 1,000 to 1,000,000.

10. A hydrophilic member according to claim 6, wherein the alkoxide compound (B) is a compound represented by the following formula (II):
(R¹²)ₖ-X-(OR¹³)₄₋ₖ Formula (II)
wherein, in the formula (II), R¹² represents a hydrogen atom, an alkyl group, or an aryl group; R¹³ represents an alkyl group or an aryl group; X represents Si, Al, Ti, or Zr; and k represents an integer of 0 to 2.
